# EUROPEAN PATENT SPECIFICATION

(11) **EP 3 558 622 B1**
(45) Date of publication and mention of the grant of the patent: **28.04.2021**
(21) Application number: 17825627.7
(22) Date of filing: 19.12.2017
(51) Int. Cl.: B29C 45/17

(54) **METHOD FOR THE INJECTION MOLDING OF INTERNALLY HOLLOW PARTS**
VERFAHREN ZUM SPRITZGIESSEN VON INNEN HOHLEN TEILEN
MÉTHODE DE MOULAGE PAR INJECTION DE PIÈCES CREUSES INTÉRIEURES

(30) Priority: 21.12.2016 IT 201600129409
(43) Date of publication of application: 30.10.2019
(73) Proprietor: Sapa S.P.A., 80121 Napoli (IT)
(72) Inventor: AFFINITA, Antonio, 80121 Napoli (NA) (IT)
(74) Representative: Fiammenghi, Eva
(86) International application number: PCT/IT2017/050006
(87) International publication number: WO 2018/116332

(56) References cited:
- WO-A1-02/087844
- JP-A- 2003 127 176
- US-A- 5 798 080
- HAN S-Y ET AL: "A new process of gas-assisted injection molding for faster cooling", JOURNAL OF MATERIALS PROCESSING TECHNO, ELSEVIER, NL, vol. 155-156, 30 November 2004 (2004-11-30), pages 1201-1206, XP004661006, ISSN: 0924-0136, DOI: 10.1016/J.JMATPROTEC.2004.04.338
- Anonymous: "Advanced Resin Evacuation Techniques", , 13 June 2011 (2011-06-13), pages 1-5, XP055459729, Retrieved from the Internet: URL:http://www.gaspins.com/documents/Resin Evacuation-PREP3-A.pdf [retrieved on 2018-03-15]

## Description

The present invention regards a method for the injection molding of internally hollow parts. This method provides for the injection of a thermoplastic melt from an injection unit along a flow path in an inner space of a mold, then the injection of a fluid in the plastic material still at the softened state, in a manner such that the plastic material is pressed against the walls of the inner space of the mold, then the cooling of the plastic material until a rigid part is formed, and finally the removal of the part from the inner space of the mold.

Among the prior art patents, US 6713014 describes a process which is deemed the closest technique. According to US 6713014, in the step of injecting the softened thermoplastic material, the inner space of the mold is not completely filled; in addition, the fluid injected in the inner space is a liquid with high thermal capacity, while a portion of the still-softened plastic material is moved from the inner space of the mold to a separate secondary compartment. The flow of the thermoplastic material from the inner space of the mold into the secondary cavity is controlled by means of a valve which is closed and opened according to the established timing.

The forming of the cavity inside the part can be achieved with a fluid which can be water or a gas under pressure, preferably nitrogen.

Nevertheless, nitrogen, which constitutes air, involves expenses for its separation and for its maintenance at low temperature.

DE 19505633 describes a process for making hollow parts of thermoplastic material which provides for the injection of the melt in the inner space of a mold and the simultaneous or successive injection of a pressurized fluid through one or more nozzles. Following the cooling, the fluid is released through one or more pressure-release nozzles separated from the fluid-injection nozzles. The fluid, preferably nitrogen, can be collected in a container and reused. US 5 798 080 A discloses the preamble of claim 1. Further gas-assisted injection molding processes with gas venting or recovery are known from WO 02/087844 A1, JP 2003 127176 A and "A new process of gas-assisted injection molding for faster cooling", HAN S-Y et al, JOURNAL OF MATERIALS PROCESSING TECHNOLOGY, ELSEVIER, NL, vol. 155-156, 30 November 2004, pages 1201-1206, ISSN: 0924-0136.

One object of the present finding is to reduce the quantity of pressurized nitrogen to a minimum, in order to reduce the costs of injection molding assisted by pressurized gas.

The abovementioned object and still others are attained by means of a method for the injection molding of internally hollow parts according to that claimed in the enclosed claims. The present invention will now be described as a non-limiting example with reference to the enclosed drawings, in which:

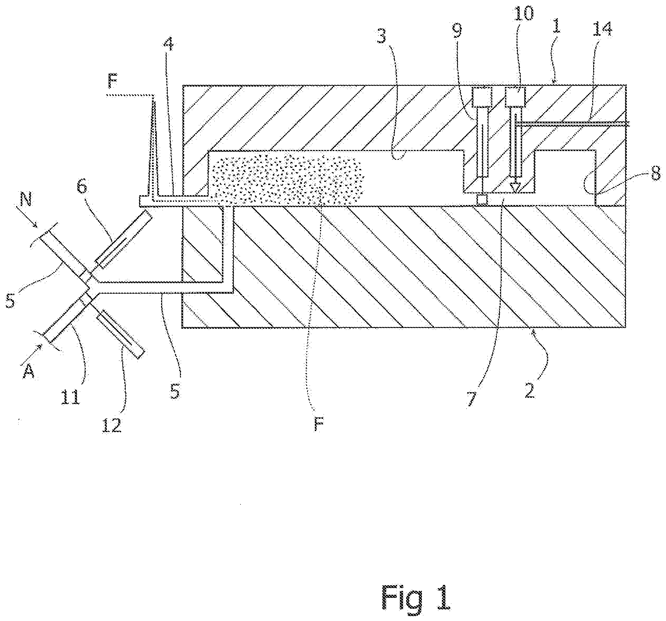

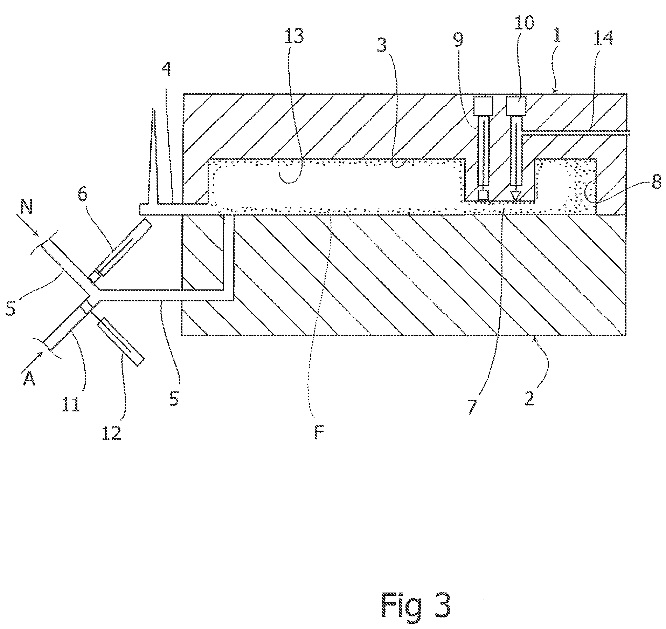

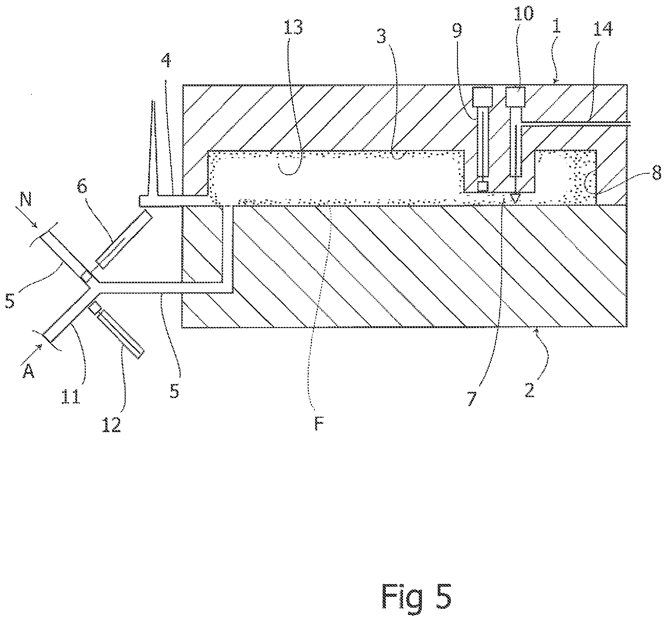

Figures 1 to 6 are schematic views of an apparatus which employs the method for the injection molding of internally hollow parts according to the present invention.

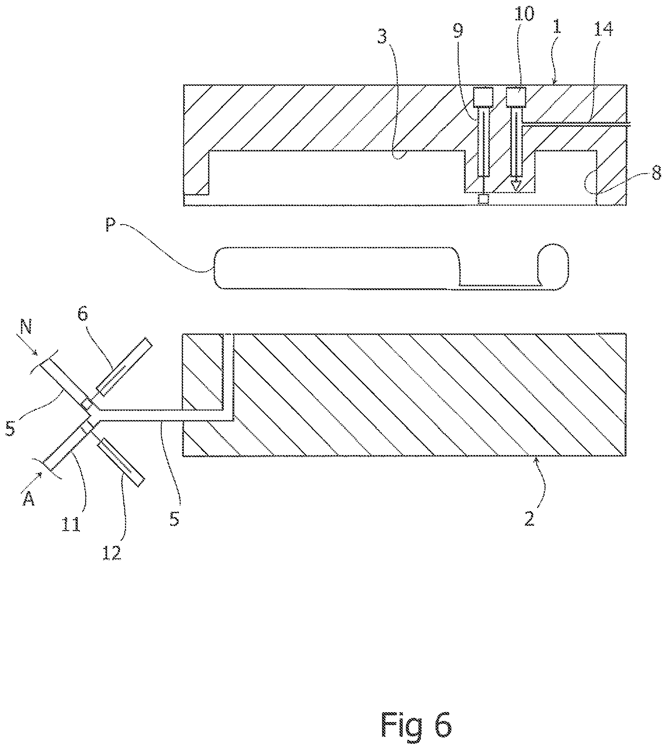

With reference to the figures, an apparatus is shown comprising a mold consisting of a matrix 1 and of a cooperating punch 2, both of which delimit an inner space 3 which has the shape of the molded part indicated with P in figure 6. The inner space 3 communicates on one side with a nozzle 4 for the injection of thermoplastic material F and with a pressurized gas supplying pipe 5, i.e. nitrogen N from a tank of nitrogen and air A from an air tank. The tanks are not shown in the figures. The pipe 5 has a check valve, not shown, in its convergence with the inner space 3. Outside the mold, an air supply duct 11 converges into the pipe 5. In the pipe 5, a valve 6 for supplying nitrogen is inserted, while on the duct 11 a valve 12 for supplying air is inserted. There is also a connecting duct 7 which places the inner space 3 in communication with a secondary compartment 8 or created well, such as the inner space 3, between the matrix 1 and the punch 2. A valve 9 acts on the connecting duct 7 for the closure and opening thereof, and a perforating element 10 penetrates into the connecting duct 7.

The method according to the invention comprises the injection in the inner space 3 (figure 1), the opening of the connecting duct 7 (figure 2), the supply of nitrogen in the inner space 3 for the formation of a cavity 13 in the part being molded (figure 3), the perforation of the part being molded in the section of the connecting duct 7 (figure 4), the venting of the cavity 13 created in the part being molded (figure 5), and the removal of the molded part P (figure 6).

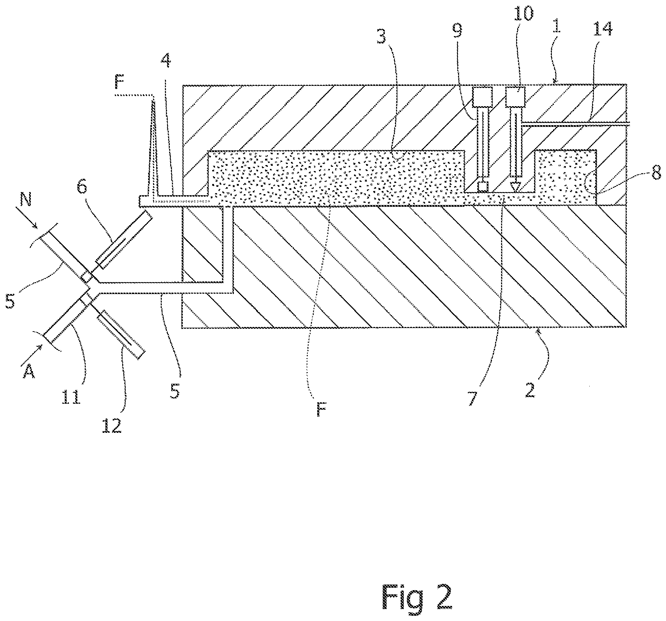

For a description of the method according to the present invention in more detail, reference is made to figure 1. Through the nozzle 4, the injection of thermoplastic material F in the inner space 3 is activated, between the matrix 1 and the punch 2. The valve 6 for nitrogen and the valve 12 for air are closed. Also closed is the valve 9 for closing and opening the connecting duct 7 between the inner space 13 and the secondary compartment 8. As the injection progresses, the valve 9 is opened, as shown in figure 2.

In this manner, the thermoplastic material, after having completely occupied the inner space 3, passes through the connecting duct 7, into the secondary compartment 8. Before this step finishes, the valve 6 is opened and pressurized nitrogen is made to flow through the supply pipe 5; such pressurized nitrogen in the inner space 3 pushes the material still in the softened state towards the walls of the inner space 3 and into the connecting duct 7 up to the compartment 8. This step, also called emptying, leads to the formation of the cavity 13 inside the part P being molded.

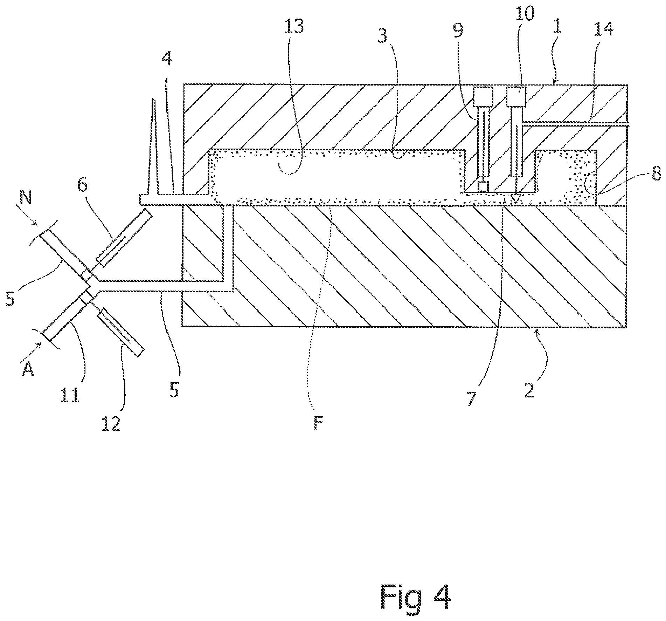

At the end of the emptying, as shown in figure 4, the supply of pressurized nitrogen N is closed by means of the valve 6, and a perforation is made in the hollow thermoplastic material situated in the connecting duct 7. The perforation is made by means of the perforating element 10 which allows the outflow of the pressurized nitrogen through a venting channel 14, with consequent possible recovery of the used nitrogen. The venting occurs via pressure difference since the gas supply pipe is inactive, given that the valve 6 for the nitrogen and the valve 12 for the air are closed.

Subsequently, there is a washing step by means of opening the valve 12 for air. Due to this opening, pressurized air is made to flow into the cavity 13 of the part P being molded. The opening of the air valve 12 makes pressurized air A flow through the air duct 11 in the cavity 13 of the part being molded P, cooling it. The air passes through the perforation previously created by means of the perforating element 10 in step 4 and exits outside the mold by means of a channel 14 passing through the perforating element 10. It must be clear that a two-way valve could be provided that switches the supply of nitrogen and air.

At the end of the washing step, the air valve 12 is closed, while the valve 6 of the nitrogen is closed and the valve 9 of the connecting duct is opened.

The extraction of the molded part P is shown in side view in figure 6. The punch 2 is moved away from the matrix 1. Of course, the gas supply is deactivated, and the supply of the thermoplastic melt is also deactivated.

The further finishing of the part P is not described.

It must be understood that the object of the invention is attained: the molding of internally hollow parts is enabled with considerable savings due to the combined use of pressurized air and nitrogen.

The protective scope of the invention is not limited to the preceding description, given only as an example, but is defined by the enclosed claims.

## Claims

1. Method for the injection molding of internally hollow parts (P) by means of an apparatus comprising a mold consisting of a matrix (1) and a cooperating punch (2), both of which delimiting an inner space (3) communicating, on one side, with a nozzle (4) for the injection of melt (F) of thermoplastic material and with a pressurized gas supplying pipe (5), controlled by a first valve (6) for supplying nitrogen (N), and on the other side with a connecting duct (7) that places said inner space (3) in communication with a secondary compartment (8), a second valve (9) acting on the connecting duct (7) for the closure and opening thereof and a perforating element (10) that perforates a part (P) in the connecting duct (7), the method comprising the steps of:
a) injecting melt (F) of thermoplastic material in said inner space (3) between the punch (2) and matrix (1),
b) opening the second valve (9) in order to place said inner space (3) in communication with the secondary compartment (8),
c) stopping the injection of the melt (F) and opening the first valve (6) for supplying nitrogen (N) in said inner space (3) in order to create a cavity (13), until the passage of the nitrogen (N) in the secondary compartment (8),
d) stopping the supply of nitrogen (N) and perforating the part (P) being molded in the section of the connecting duct (7) by means of the perforating element (10) for the outflow of nitrogen (N) from the mold,
e) supplying (A) pressurized air into said gas pipe (5) for washing towards the atmosphere after stopping the supply of nitrogen (N) and the perforation of the part (P) being molded in the section of the connecting duct (7),
**characterised in that**
f) in step (d) the nitrogen (N) flowing out of the mold is collected, and
**in that** in the same step (d), perforating the part (P) being molded by means of the perforating element (10) occurs simultaneously to stopping the supply of nitrogen (N).

2. Method according to claim 1, wherein the pressurized air supply (A) is achieved through a supply duct (11) controlled by means of a third gas supply valve (12) and converging into said gas pipe (5).

## Patentansprüche

1. Verfahren zum Spritzgießen von innen hohlen Teilen (P) mittels einer Vorrichtung, die eine Form, die aus einer Matrix (1) und einem damit zusammenwirkenden Stempel (2) besteht, die beide einen Innenraum (3) begrenzen, der auf einer Seite mit einer Düse (4) zum Einspritzen von Schmelze (F) aus thermoplastischem Material und mit einer Druckgaszufuhrleitung (5) in Verbindung steht, gesteuert durch ein erstes Ventil (6) zum Zuführen von Stickstoff (N), und auf der anderen Seite mit einer Verbindungsleitung (7), die den Innenraum (3) mit einem sekundären Fach (8) in Verbindung bringt, ein zweites Ventil (9), das auf die Verbindungsleitung (7) wirkt, um diese zu schließen und zu öffnen, und ein Perforierungselement (10), das einen Teil (P) in der Verbindungsleitung (7) perforiert, aufweist, wobei das Verfahren die folgenden Schritte aufweist:
a) Einspritzen von Schmelze (F) aus thermoplastischem Material in den Innenraum (3) zwischen dem Stempel (2) und der Matrix (1),
b) Öffnen des zweiten Ventils (9), um den Innenraum (3) mit dem sekundären Fach (8) in Verbindung zu bringen,
c) Stoppen des Einspritzens der Schmelze (F) und Öffnen des ersten Ventils (6) zum Zuführen von Stickstoff (N) in den Innenraum (3), um einen Hohlraum (13) zu erzeugen, bis der Stickstoff (N) in das sekundäre Fach (8) gelangt,
d) Stoppen der Zufuhr von Stickstoff (N) und Perforieren des geformten Teils (P) im Abschnitt der Verbindungsleitung (7) mittels des Perforierungselements (10) für den Ausfluss von Stickstoff (N) aus der Form,
e) Zuführen (A) von Druckluft in die Gasleitung (5) zum Spülen in Richtung der Atmosphäre nach dem Stoppen der Zufuhr von Stickstoff (N) und der Perforation des in dem Abschnitt der Verbindungsleitung (7) geformten Teils (P),
**dadurch gekennzeichnet dass**
f) in Schritt (d) der aus der Form ausströmende Stickstoff (N) aufgefangen wird, und **dadurch, dass** im selben Schritt (d) das Perforieren des geformten Teils (P) mittels des Perforierungselements (10) gleichzeitig mit dem Stoppen der Zufuhr von Stickstoff (N) erfolgt.

2. Verfahren gemäß Anspruch 1, wobei die Druckluftzufuhr (A) durch eine Zufuhrleitung (11), die mittels eines dritten Gaszufuhrventils (12) gesteuert wird und in die Gasleitung (5) mündet, erfolgt.

## Revendications

1. Procédé de moulage par injection de pièces (P) intérieurement creuses au moyen d'un appareil comprenant un moule constitué d'une matrice (1) et d'un poinçon (2) coopérant, dont les deux délimitent un espace intérieur (3) communiquant, d'un côté, avec une buse (4) pour l'injection de matière fondue (F) de matériau thermoplastique et avec un tuyau (5) d'alimentation en gaz comprimé, commandé par une première vanne (6) pour l'alimentation en azote (N), et de l'autre côté avec un conduit de raccordement (7) qui place ledit espace intérieur (3) en communication avec un compartiment secondaire (8), une seconde vanne (9) agissant sur le conduit de raccordement (7) pour la fermeture et l'ouverture de celui-ci et un élément de perforation (10) qui perfore une pièce (P) dans le conduit de raccordement (7), le procédé comprenant les étapes de :
a) l'injection de matière fondue (F) de matériau thermoplastique dans ledit espace intérieur (3) entre le poinçon (2) et la matrice (1),
b) l'ouverture de la seconde vanne (9) afin de placer ledit espace intérieur (3) en communication avec le compartiment secondaire (8),
c) l'arrêt de l'injection de la matière fondue (F) et l'ouverture de la première vanne (6) pour l'alimentation en azote (N) dans ledit espace intérieur (3) afin de créer une cavité (13), jusqu'au passage de l'azote (N) dans le compartiment secondaire (8),
d) l'arrêt de l'alimentation en azote (N) et la perforation de la pièce (P) en cours de moulage dans la section du conduit de raccordement (7) au moyen de l'élément de perforation (10) pour l'écoulement de l'azote (N) du moule,
e) l'alimentation (A) en air comprimé dans ledit tuyau (5) de gaz pour le lavage vers l'atmosphère après l'arrêt de l'alimentation en azote (N) et la perforation de la pièce (P) en cours de moulage dans la section du conduit de raccordement (7),
**caractérisé en ce que**
f) dans l'étape d) l'azote (N) s'écoulant du moule est collecté, et
**en ce que** dans la même étape (d), la perforation de la pièce (P) en cours de moulage au moyen de l'élément de perforation (10) se produit simultanément à l'arrêt de l'alimentation en azote (N).

2. Procédé selon la revendication 1, dans lequel l'alimentation (A) en air comprimé est réalisée à travers un conduit d'alimentation (11) commandé au moyen d'une troisième vanne d'alimentation en gaz (12) et convergeant dans ledit tuyau (5) de gaz.
